# FASCICULE DE BREVET EUROPEEN

(11) **EP 3 777 247 B1**
(45) Date de publication et mention de la délivrance du brevet: **07.12.2022**
(21) Numéro de dépôt: 19720954.7
(22) Date de dépôt: 28.03.2019
(51) Int. Cl.: H04S 7/00, G06F 3/16, H04N 21/218, H04N 21/2187, H04N 21/233, H04N 21/235, H04N 21/2368, H04N 21/439, H04N 21/454, H04R 3/00, G10L 21/0272

(54) **PROCÉDÉ ET SYSTÈME DE DIFFUSION D'UN FLUX AUDIO MULTICANAL À DES TERMINAUX DE SPECTATEURS ASSISTANT À UN ÉVÈNEMENT SPORTIF**
VERFAHREN UND SYSTEM ZUM SENDEN EINES MEHRKANAL-AUDIODATENSTROMS AN ENDGERÄTE VON ZUSCHAUERN EINER SPORTVERANSTALTUNG
METHOD AND SYSTEM FOR BROADCASTING A MULTICHANNEL AUDIO STREAM TO TERMINALS OF SPECTATORS ATTENDING A SPORTING EVENT

(30) Priorité: 29.03.2018 FR 1852774
(43) Date de publication de la demande: 17.02.2021
(73) Titulaire: Institut Mines Telecom, 91120 Palaiseau (FR)
(72) Inventeur: BLOUET, Raphael, 33800 BORDEAUX (FR); ESSID, Slim, 94110 ARCUEIL (FR)
(74) Mandataire: Atout PI Laplace
(86) Numéro de dépôt international: PCT/FR2019/050731
(87) Numéro de publication internationale: WO 2019/186079

(56) Documents cités:
- WO-A1-2017/182714
- US-A- 5 714 997
- US-A1- 2014 355 769
- US-A1- 2015 195 641
- US-A1- 2015 373 474
- US-B1- 9 832 587

## Description

L'invention concerne les procédés et les systèmes de diffusion permettant d'améliorer la perception sonore de spectateurs assistant à un évènement sportif.

Plus précisément, l'invention porte sur des procédés et des systèmes de diffusion utilisant la réalité augmentée sonore, et permettant à un spectateur assistant à un évènement sportif de percevoir des flux audio personnalisés issus de l'événement.

Le document WO 2007/115392 décrit un système permettant à des spectateurs d'assister à distance à plusieurs évènements sportifs se déroulant simultanément. Plus précisément, les spectateurs sont munis d'un terminal mobile électronique sur lequel ils reçoivent plusieurs flux multimédias correspondant chacun à un des évènements sportifs retransmis en direct. Typiquement, les flux multimédias peuvent être des flux vidéo ou des flux audio. Le spectateur peut choisir à quels flux multimédia il souhaite avoir accès. Toutefois, un tel système ne permet pas une immersion complète du spectateur.

Le document US 5714997 décrit un système de réalité virtuelle télévisuel destiné à immerger un utilisateur dans un évènement sportif. Des microphones enregistrant le son du match sont répartis sur le terrain de jeu. Les sons du match ainsi obtenus sont filtrés et restitués à un spectateur sur un canal droit ou gauche d'un dispositif de sortie audio, en fonction d'une position virtuelle du spectateur sur le terrain de jeu. Le document WO 2017/182714 A1 décrit une méthode pour une retransmission audio en réalité virtuelle ou augmentée, centrée sur la fusion de flux audio pour réduire le nombre de canaux audio en sortie. Notamment, les flux audio sont restitués au spectateur en fonction d'un gain choisi à appliquer, et d'une position virtuelle du spectateur. L'objet de ces documents ne permet toutefois pas une immersion complète et en temps réel du spectateur dans l'événement sportif.

Le document US 9832587 décrit une méthode pour faciliter la communication « proche distance » entre au moins deux utilisateurs, lorsqu'ils se situent dans un environnement bruyant tel qu'un restaurant ou un évènement sportif. Le document US 2014/355769 décrit une méthode de décomposition d'un flux audio pour une restitution sonore spatialisée. Le document US 2015/195641 décrit une méthode pour générer un environnement audio à un utilisateur. Aucun de ces documents ne s'applique à une diffusion d'un évènement sportif utilisant la réalité augmentée sonore, et permettant à un spectateur assistant à l'événement sportif de percevoir des flux audio personnalisés issus de l'événement.

La présente invention vient améliorer la situation.

A cet effet, elle propose un procédé selon la revendication 1.

Grâce à ces dispositions, le spectateur est réellement immergé, de manière auditive, dans l'événement sportif. En effet, la restitution sonore spatialisée permet de prendre en compte la position du spectateur afin que les flux audio diffusés correspondent exactement à ce qu'il est en train de vivre.

Selon une réalisation, l'analyse de la scène sonore comprend en outre :
- pour chaque flux audio monocanal, une classification dans une classe parmi une pluralité de classes, en fonction d'un type de la source sonore associée au flux audio monocanal,

la table comportant en outre une donnée de classe de flux audio monocanal en association de chaque identifiant de flux audio monocanal,
et le procédé comprenant, auprès du terminal :
   - une lecture de la table de description, pour identifier la classe de chaque flux audio monocanal,
   - l'application de gains respectifs aux flux audio monocanal pour la restitution sonore spatialisée, les gains étant choisis par un spectateur du terminal en fonction de la classe de chaque flux audio monocanal.

De cette manière, le spectateur peut choisir quel type de flux audio il souhaite écouter. Son immersion dans l'événement sportif n'en est qu'améliorée puisqu'il peut mettre de côté les flux audio dont la source sonore ne l'intéresse pas. Le spectateur vit une expérience personnalisée de l'événement sportif.

Selon une réalisation, le procédé comprend une détermination d'une orientation du spectateur par rapport à un référentiel choisi, le procédé comprenant en outre une application de gains respectifs aux flux audio monocanal spatialisés, les gains respectifs appliqués aux flux audio monocanal spatialisés évoluant en fonction de la position et/ou de l'orientation du spectateur par rapport au référentiel choisi.

De cette manière, l'immersion du spectateur dans l'événement sportif est encore augmentée. En effet, la détermination de son orientation lui permet d'effectuer un « zoom audio » sur la partie de l'espace accueillant l'événement sportif qu'il est en train de viser.

Selon une réalisation, le procédé comprend une division de l'espace accueillant l'événement sportif en une pluralité de sous-espaces, au moins un capteur audio étant prévu dans chaque sous-espace, le procédé comportant la construction de la scène sonore par un mixage des flux bruts captés par les capteurs audio, le procédé comprenant, pour l'analyse de la scène sonore, une détermination des positions de sources sonores relativement à chacun desdits sous-espaces.

De cette manière, cette étape permet d'effectuer la restitution sonore spatialisée avec un nombre réduit d'étapes, de calculs et d'échanges de données. En effet, il suffit de déterminer de manière grossière la localisation des sources sonores.

Selon une réalisation, l'isolation de sources sonores est effectuée par séparation de sources.

Selon une réalisation, l'isolation de sources sonore est effectuée par masquage temps-fréquence.

Selon une réalisation, la classification des flux audio monocanal est menée par apprentissage, les flux audio monocanal étant classifiés par une technique de réseaux de neurones profonds.

Ainsi il est possible de mettre en oeuvre le procédé en temps réel.

Le procédé comprend en outre, auprès du serveur :
- pour chaque phase de jeu, une détermination d'un type de la phase de jeu, parmi une pluralité de types de phases de jeu,
- une sélection, dans une bibliothèque de flux audio informatifs, d'au moins un flux audio informatif en fonction du type de la phase de jeu déterminé, et
- une transmission du flux audio informatif au terminal en vue de sa restitution sonore.

Ainsi, cela permet au spectateur d'être immergé de manière encore plus importante dans l'événement sportif. Cela permet également au spectateur de ne pas rater de phases de jeu cruciales puisque le système permet d'avertir le spectateur de la phase de jeu en cours.

La détermination du type de phase de jeu et éventuellement la localisation sur le terrain, associée à cette phase de jeu, sont menées initialement par apprentissage sur des images acquises par capture vidéo de phases de jeu par au moins une caméra, l'apprentissage étant effectué au moyen d'une technique de réseaux de neurones profonds.

De cette manière, la détermination et éventuellement la localisation du type de phase de jeu peuvent être faites en temps réel, de manière automatique.

La présente invention vise aussi un système selon la revendication 8.

Selon une réalisation, un capteur d'orientation est apte à déterminer l'orientation du spectateur dans l'espace, le capteur d'orientation étant choisi parmi une centrale inertielle et/ou un accéléromètre.

D'autres avantages et caractéristiques de l'invention apparaitront à la lecture de la description détaillée ci-après d'exemples de réalisation de l'invention, et à l'examen des dessins annexés sur lesquels :

La figure 1 est une vue schématique illustrant le fonctionnement d'un système de diffusion d'un flux audio multicanal selon l'invention,

La figure 2 est un ordinogramme des étapes principales d'un procédé de diffusion d'un flux audio multicanal à des terminaux de spectateurs assistant à un événement selon un exemple de réalisation selon l'invention,

La figure 3 représente de manière schématique le système selon l'invention.

Par « événement sportif », on entend tout événement sportif réunissant un grand nombre de spectateur à un même endroit pour assister à une performance sportive. Par exemple, le système peut être utilisé dans le cadre d'un match de football, de basketball, de baseball, de rugby, de hockey, de tennis, etc. Cette liste n'est pas limitative.

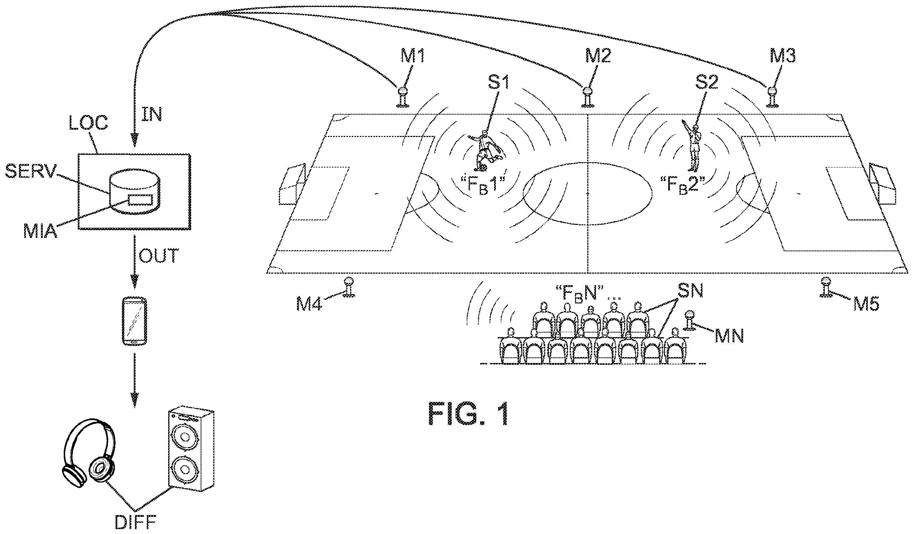

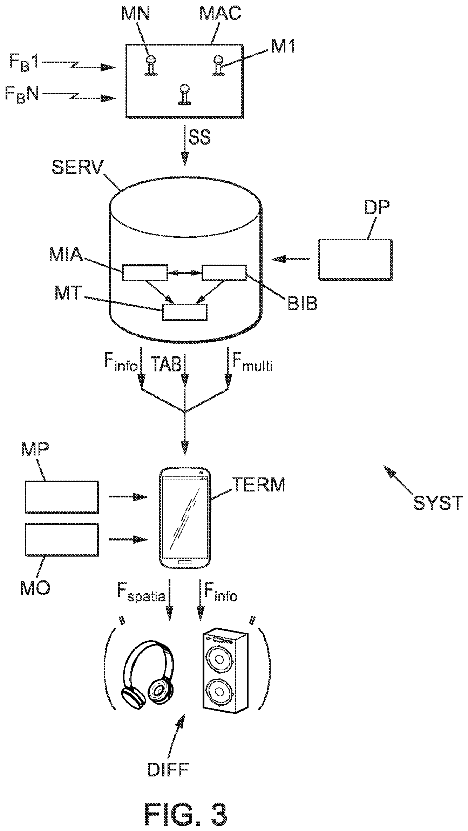

Comme illustré sur les figures 1 et 3, le système SYST comprend un module d'acquisition MAC. Le module d'acquisition MAC comprend une pluralité de capteur audio M1 - MN, par exemple des microphones. Les capteurs audio M1 - MN sont répartis sur l'espace accueillant l'événement sportif. L'aspect de l'espace accueillant l'évènement sportif peut grandement varier en fonction du type d'événement sportif. Notamment, l'espace accueillant l'événement sportif peut être un stade avec des gradins, un circuit de course, etc.

Pour chaque type d'espace accueillant l'événement sportif (ou « espace » dans la suite de la description), les capteurs audio M1 - MN sont répartis de manière à ce que chaque flux audio bruts F_{B}1 - F_{B}N issu de l'événement sportif soit capté. Les capteurs audio Ml - MN peuvent alors être répartis de manière homogène autour de l'espace accueillant l'événement sportif.

On entend par « flux audio bruts » les flux audio qui sont enregistrés par les capteurs audio Ml - MN et qui ne sont pas encore traités. Les flux audio bruts peuvent comprendre des clameurs de la foule assistant à l'évènement sportif, des bruits issus du jeu des sportifs, par exemple un coup dans une balle, un cri d'effort etc. Les flux audio bruts peuvent également comprendre des paroles échangées par les sportifs. Les flux audio bruts peuvent également comprendre les paroles échangées entre les spectateurs. Les flux audio bruts forment une scène sonore comportant une ou plusieurs sources sonores.

Dans l'exemple de la figure 1, des flux audio bruts F_{B}1 - F_{B}N et des sources sonores SI - SN sont représentés. Le flux audio brut F_{B}1, associé à la source sonore S1, correspond par exemple à un coup donné par un joueur dans un ballon. Le flux audio brut F_{B}2, associé à la source sonore S2, correspond à un coup de sifflet et le flux audio F_{B}N, associé à la source sonore SN, correspond à des paroles échangées entre des spectateurs. Les flux audio F_{B}1 - F_{B}N sont captés par les capteurs audio M1 - MN du module d'acquisition MAC.

Les flux audio F_{B}1 - F_{B}N sont diffusés dans l'espace. Ainsi, chaque flux audio F_{B}1 - F_{B}N est capté de manière plus ou moins intense par chaque capteur audio M1 - MN. Par exemple, le capteur audio M1 capte principalement le flux audio F_{B}1, mais il capte également le flux audio F_{B}2. De même, le capteur audio M5 capte de manière très précise le flux audio brut F_{B}N, un peu moins le flux audio F_{B}1 et encore moins le flux audio F_{B}2. La scène sonore SS est construite par un mixage de tous les flux audio bruts F_{B}1, F_{B}2 et F_{B}N. La scène sonore SS comporte plusieurs sources sonores S1 - SN.

Le système SYST peut comprendre au moins deux réseaux de capteurs audio M1 - MN. Le premier réseau de capteurs audio permet par exemple de capter le fond sonore de l'événement sportif, typiquement la clameur de la foule assistant à l'événement sportif. Le premier réseau de capteurs audio peut également permettre de capter les paroles échangées entre les spectateurs. Ainsi, les capteurs audio du premier réseau sont de préférence disposés près des spectateurs, et de préférence directement sur les spectateurs.

Le deuxième réseau de capteurs audio Ml - MN peut également permettre de capter le fond sonore de l'événement sportif ou la clameur de la foule. Le deuxième réseau peut également capter les flux audio bruts associés à l'évènement sportif. Cela peut comprendre les bruits issus du jeu, tel qu'un coup dans une balle, ou encore les paroles échangées entre les joueurs.

Il est possible de définir au moins trois types de sources sonores. Le premier type correspond à l'ambiance de l'événement sportif. Le premier type comprend notamment la clameur de la foule assistant à l'événement sportif. Le deuxième type correspond aux évènements de l'événement sportif. Il comprend par exemple les coups dans une balle, des coups de sifflet, etc. Le troisième type correspond aux paroles échangées entre les spectateurs de l'événement sportif.

La pluralité de flux audio bruts captés par chacun des capteurs audio Ml - MN est envoyée vers un local d'analyse LOC. La transmission est représentée par la flèche « IN » sur la figure 1. Le local d'analyse comprend au moins un serveur SERV auprès duquel un filtrage des flux audio bruts F_{B}1 - F_{B}N est appliqué. Notamment, un filtrage par séparation de sources est effectué. La séparation de sources permet d'isoler les différents évènements sonores de jeu à partir de la scène sonore enregistrée par les capteurs audio. Les flux filtrés sont transmis à un terminal TERM en vue d'une restitution spatialisée d'une partie au moins des flux audio sur le terminal TERM. Le terminal TERM est par exemple un terminal mobile de type téléphone intelligent, tablette électronique ou ordinateur.

Des dispositifs de diffusion DIFF sont également prévus pour diffuser les flux audio spatialisés. Les dispositifs de diffusion DIFF peuvent être des enceintes personnelles ou des casques audio que chaque spectateur a à sa disposition.

Le système SYST selon l'invention permet notamment de faire une restitution sonore personnalisée. Par exemple, la restitution sonore des sons relatifs à l'évènement sportif est faite en fonction de la localisation de chaque source sonore S1 - SN ainsi que de la position du spectateur, utilisant le terminal TERM, dans l'espace accueillant l'événement sportif. La position du spectateur peut être déterminée par un module de positionnement MP, apte à localiser le spectateur par géolocalisation par satellite (« GPS »), par triangulation ou par communication en champ proche (« Near fiel communication » ou « NFC » en anglais). Un spectateur entendra de manière plus audible un flux audio dont la source sonore associée est proche de lui. En reprenant l'exemple de la figure 1, un spectateur situé à gauche du terrain entendra de manière plus prononcée le flux audio F_{B}1 associé à la source S1 que le flux audio F2 associé à la source sonore S2.

Dans un exemple de réalisation, le spectateur a la possibilité d'entrer des préférences de restitution de la scène sonore via le terminal TERM. Par exemple, le spectateur peut choisir d'entendre des flux audio associés à un certain type de source sonore. Par exemple, le spectateur peut choisir de n'entendre que les paroles échangées entre les spectateurs, ou que les coups de sifflet de l'arbitre. Le spectateur peut également choisir d'entendre de manière plus ou moins intense tous les flux audio, en fonction du type de source sonore à laquelle ils sont associés.

Selon un autre exemple de réalisation, le spectateur entend de manière plus intense certains flux audio en fonction de son orientation dans l'espace accueillant l'événement sportif. Par exemple, le système comprend module d'orientation MO comprenant un capteur d'orientation pour déterminer dans quelle direction regarde le spectateur. Le spectateur peut alors être équipé d'un accessoire, par exemple un casque ou une vignette, supportant le capteur d'orientation. Le capteur d'orientation peut être un accéléromètre ou une centrale inertielle. Il est alors possible de déterminer vers quelle source sonore S1 - SN le spectateur est tourné pour amplifier le volume de diffusion des flux audio associés à cette source sonore. L'expérience du spectateur en est améliorée puisque cela permet d'être complètement immergé dans l'évènement sportif auquel il assiste.

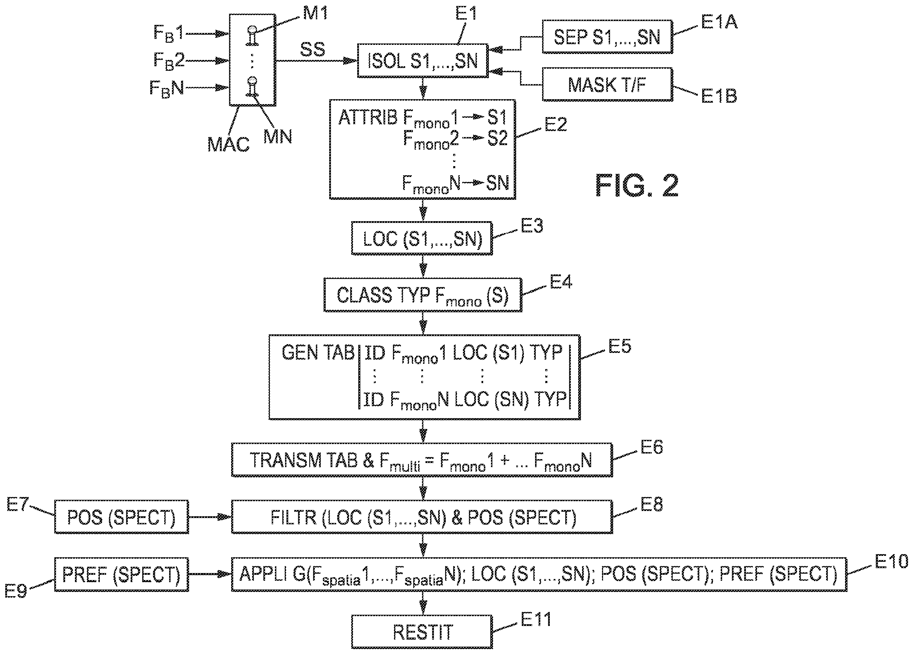

La figure 2 illustre de manière plus précise les principales étapes du procédé mis en par le système SYST.

Le module d'acquisition MAC capte tous les flux audio bruts F_{B}1 - F_{B}N au moyen des capteurs audio Ml - MN. Les flux audio bruts F_{B}1 - F_{B}N forment une scène sonore SS comprenant au moins une source sonore S1 - SN.

Les étapes E1 à E5 sont effectuées auprès du serveur SERV. Le serveur SERV comprend un module informatisé d'analyse MIA permettant d'isoler chaque source sonore SI - SN de la scène sonore SS. La scène sonore SS est transmise au module informatisé d'analyse MIA. A l'étape E1, le module informatisé d'analyse MIA isole chaque source sonore S1 - SN de la scène sonore SS. L'isolation des sources sonores S1 - SN peut être faite par une méthode de séparation de sources par formation de voies, tel qu'illustré à l'étape E1A. En variante, l'étape d'isolation des sources sonores SI - SN est faite par un masquage temps-fréquence, tel qu'illustré à l'étape E1B. Le masquage temps-fréquence permet notamment de faire une séparation de sources lorsque deux évènements se sont produits simultanément dans une même zone de l'espace.

L'étape E1 ayant permis d'isoler chaque source sonore S1 - SN, un flux audio monocanal Fₘₒₙₒ1 - FₘₒₙₒN propre est peut être attribué à chaque source sonore SI - SN à l'étape E2.

A l'étape E3, chaque source sonore SI - SN est localisée dans l'espace accueillant l'événement sportif. Ainsi, chaque flux audio monocanal Fₘₒₙₒ1 - FₘₒₙₒN peut être localisé en fonction de la localisation de la source sonore SI - SN qui lui est propre. Notamment, l'espace accueillant l'événement sportif peut être divisé en une pluralité de sous-espaces. Par exemple, l'espace accueillant l'évènement sportif peut être quadrillé, bien que l'espace puisse être divisé selon une autre configuration. Par exemple, chaque sous-espace peut correspondre à une zone propre de jeu, par exemple le centre du terrain, chaque zone de but, les zones de penalty, etc. Il est prévu au moins un capteur audio Ml - MN par sous-espace. La localisation des sources sonores SI - SN est réalisée relativement à chaque sous-espace. Plus précisément, la localisation de chaque source sonore SI - SN correspond au sous-espace dans lequel elle se situe. La localisation de chaque flux audio monocanal Fₘₒₙₒ1 - FₘₒₙₒN et celle de la source sonore SI - SN qui lui est associée.

Le module informatisé d'analyse MIA génère une table de description TAB à l'étape E5. Chaque flux audio monocanal Fₘₒₙₒ1 - FₘₒₙₒN est défini par un identifiant ID. Chaque identifiant ID est associé à une donnée de localisation LOC du flux audio monocanal Fₘₒₙₒ1 - FₘₒₙₒN, déterminé à l'étape E3.

Selon une variante de réalisation, le procédé selon l'invention comprend en outre une étape préalable E4 de classification des flux audio monocanal Fₘₒₙₒ1 - FₘₒₙₒN. Cette classification est faite en fonction du type de la source sonore SI - SN associée au flux audio monocanal Fₘₒₙₒ1 - FₘₒₙₒN. Comme décrit plus haut, il y a au moins trois types de sources sonores SI - SN. Le premier type correspond à l'ambiance de l'événement sportif et comprend notamment la clameur de la foule. Le deuxième type correspond aux évènements de l'événement sportif et comprend notamment les coups des joueurs et les sifflets de l'arbitre. Le troisième type correspond aux paroles échangées entre spectateurs. Chaque type de source sonore peut être associé à au moins une classe. Plusieurs classes peuvent correspondre à un même type de source sonore. Par exemple, une première classe correspondant aux coups de pied dans une balle et une deuxième classe comprenant les coups de sifflet de l'arbitre peuvent être associées au deuxième type de source sonore.

Selon une réalisation, la classification des flux audio monocanal Fₘₒₙₒ1 - FₘₒₙₒN peut être effectuée au moyen d'une méthode de séparation de sources supervisée. La classification est menée par apprentissage, au moyen d'une technique de réseaux de neurones profonds. Cela a l'avantage de permettre une mise en en temps réel du procédé. En effet, l'apprentissage permet de reconnaître, dès la transmission vers le serveur SERV des flux audio captés par le module d'acquisition MAC, le type de la source sonore à laquelle les flux audio sont associés.

Selon cette variante de réalisation, une classe TYP est en outre attribuée à chaque identifiant ID de flux audio monocanal Fₘₒₙₒ1 - FₘₒₙₒN compris dans la table de description TAB.

La table de description TAB est ensuite transmise vers le terminal TERM à l'étape E6 par un module de transmission MT. La transmission comprend également un flux audio multicanal Fₘᵤₗₜᵢ comprenant l'ensemble des flux audio monocanal.

Selon une variante de réalisation, le système SYST ne comprend pas de module de transmission MT. Les flux audio monocanal Fₘₒₙₒ1 - FₘₒₙₒN sont compris dans une bibliothèque BIB et sont synthétisés en local en vue de leur restitution sonore spatialisée.

Les étapes E1 à E6 sont réalisées en temps réel auprès du serveur SERV.

Les étapes E7 à E11 sont effectuées auprès du terminal TERM. Le terminal TERM a reçu la table de description TAB ainsi que le flux audio multicanal _{Fmulti} agrégeant l'ensemble des flux audio monocanal Fₘₒₙₒ1 - FₘₒₙₒN.

Le terminal TERM peut utiliser la table de description pour appliquer au moins un filtrage de spatialisation sonore. Le terminal TERM reçoit ainsi à l'étape E7 des données de positionnement du spectateur utilisant le terminal TERM. Les données de positionnement sont obtenues par le module de positionnement MP et/ou par le module d'orientation MO. Les données de positionnement comprennent au moins la position géographique du spectateur dans le référentiel de l'espace accueillant l'événement sportif.

Les données de positionnement peuvent en outre comprendre une donnée relative à l'orientation du spectateur par rapport à un référentiel fixe de l'espace, par exemple le centre du terrain. L'orientation du spectateur correspond au sous-espace vers lequel il est tourné ; L'utilisation de données d'orientation du spectateur permet, comme vu plus haut, de faire un « zoom audio » sur la partie de l'espace visée par le spectateur.

Les données de positionnement sont acquises en temps réel et en continu par le module de positionnement MP.

A l'étape E8, un filtrage est appliqué aux flux audio monocanal Fₘₒₙₒ1 - FₘₒₙₒN en fonction des données de positionnement du spectateur et de la localisation des flux audio monocanal compris dans la table de description TAB. Une pluralité de flux audio monocanal spatialisés Fₛₚₐₜᵢₐ1 - FₛₚₐₜᵢₐN est ainsi obtenue.

Toutefois, le spectateur a la possibilité de mettre en avant certains flux audio par rapport à d'autres. Il a donc la possibilité de choisir s'il souhaite faire un zoom audio en fonction de son orientation dans l'espace, ou quelles classes de flux audio à diffuser. Ainsi, à l'étape E9, le terminal TERM reçoit des instructions de préférence du spectateur. Le spectateur peut par exemple entrer ses instructions via une interface du terminal TERM. Par exemple, une application dédiée peut être prévue pour permettre un échange entre le spectateur et le terminal TERM.

A l'étape E10, le terminal TERM applique des gains respectifs à au moins une partie des flux audio monocanal spatialisés Fₛₚₐₜᵢₐ1 - FₛₚₐₜᵢₐN.

Selon la variante de réalisation dans laquelle l'orientation du spectateur est prise en compte, la table de description TAB est lue. Un gain respectif est appliqué aux flux audio monocanal spatialisés Fₛₚₐₜᵢₐ1 - FₛₚₐₜᵢₐN dont les localisations associées dans la table de description TAB correspondent à la direction dans laquelle le spectateur est orienté. Plus précisément, un gain plus important est appliqué aux flux audio monocanal spatialisés Fₛₚₐₜᵢₐ1 - FₛₚₐₜᵢₐN dont la source sonore est localisée dans le même sous-espace que celui visé par le spectateur.

Les données de positionnement étant acquises en temps réel et en continu, les gains appliqués peuvent évolués en fonction de ces données. Un changement d'orientation ou de position géographique du spectateur entraîne une modification de la valeur des gains appliqués aux différents flux audio monocanal spatialisés. La modification de la valeur des gains appliqués est faite en temps réel.

Selon la deuxième variante de réalisation dans laquelle la classe des flux audio est prise en compte, la table de description TAB est lue afin de déterminer quelle classe est associée à quel flux audio monocanal spatialisé Fₛₚₐₜᵢₐ1 - FₛₚₐₜᵢₐN. Un gain respectif est appliqué aux flux audio monocanal spatialisés Fₛₚₐₜᵢₐ1 - FₛₚₐₜᵢₐN dont la classe correspond à celle choisie par le spectateur. Le spectateur peut modifier à tout moment ses instructions de préférence, de sorte qu'une application de gains différente est réalisée. La modification des valeurs des gains respectifs est effectuée en temps réel.

A l'étape E11, les flux audio monocanal spatialisés Fₛₚₐₜᵢₐ1 - FₛₚₐₜᵢₐN sont envoyés vers un module de diffusion de type casque audio ou enceinte personnelle. Le spectateur peut alors profiter de l'immersion auditive fournie par le système selon l'invention.

Il est également prévu d'intégrer aux flux audio diffusés aux spectateurs des informations relatives au déroulement de l'événement sportif. Le serveur SERV comprend en outre une bibliothèque BIB comprenant une pluralité de flux audio informatifs F_{info}1 - F_{info}N associés chacun à une phase de jeu. Les flux audio informatifs F_{info}1 - F_{info}N peuvent être diffusés au spectateur automatiquement. Le type de la phase de jeu en cours est déterminé parmi une pluralité de types de phases de jeu. Les types de phases de jeu comprennent par exemple un but, un penalty, une faute, etc. Selon le type de phase de jeu déterminé, au moins un flux audio informatif F_{info}1 - F_{info}N est sélectionné dans la bibliothèque BIB en vue de sa restitution sonore. Le flux audio informatif E_{info}1 - F_{info}N peut être automatiquement diffusé.

En variante, les flux audio informatifs F_{info}1 - F_{info}N ne sont diffusés que si le spectateur l'a choisi. Les flux audio informatifs F_{info}1 - F_{info}N permettent notamment d'ajouter une information auditive sur ce que le spectateur visualise. Par exemple, dans une phase de but, le flux audio auditif diffusé indique au spectateur qu'il y a but. Cela permet d'augmenter encore l'immersion du spectateur dans l'événement sportif auquel il assiste. Cela permet également de ne manquer aucune phase importante de jeu.

Selon un exemple, la détermination du type de la phase de jeu en cours est réalisé au moyen d'un dispositif de capture DC comprenant au moins une caméra vidéo, tel qu'illustré sur la figure 3. Le dispositif de capture DC est disposé de manière à pouvoir suivre tous les phases de l'événement sportif. Les images capturées par le dispositif de capture peuvent être transmises au module informatisé d'analyse qui est apte à déterminer, en temps réel, un type de la phase de jeu que le dispositif de capture DC est en train de capturer. Les types de phases de jeu sont déterminés au moyen d'une méthode d'apprentissage par réseau de neurones profonds.

## Revendications

1. Procédé de diffusion d'un flux audio multicanal (Fₘᵤₗₜᵢ) à des terminaux (TERM) de spectateurs assistant à un évènement sportif,
le procédé comprenant :
- une acquisition, au moyen d'une pluralité de capteurs audio (M1 - MN) répartis sur un espace accueillant l'événement sportif, d'une pluralité de flux audio bruts (F_{B}1 - F_{B}N) constituant une scène sonore (SS) comportant une ou plusieurs sources sonores (S1 - SN),
- une analyse, par un serveur (SERV), de la scène sonore (SS) comprenant :
∘ une isolation de chaque source sonore (S1 - SN) de la scène sonore (SS) et l'attribution d'un flux audio monocanal (Fₘₒₙₒ1 - FₘₒₙₒN), propre à chaque source sonore (S1 - SN),
∘ pour chaque flux audio monocanal (Fₘₒₙₒ1 - FₘₒₙₒN), une localisation dans l'espace en fonction d'une position dans l'espace accueillant l'événement sportif de la source sonore (S1 - SN) associée au flux audio monocanal (Fₘₒₙₒ1 - FₘₒₙₒN),
∘ la génération d'une table de description (TAB) des flux audio monocanal (Fₘₒₙₒ1
- FₘₒₙₒN), la table de description (TAB) comportant un identifiant (ID) de chaque flux audio monocanal (Fₘₒₙₒ1 - FₘₒₙₒN) et, en association avec chaque identifiant (ID) de flux audio monocanal (Fₘₒₙₒ1 - FₘₒₙₒN), au moins une donnée de localisation,
- une transmission, par le serveur (SERV), de la table de description (TAB) avec un flux audio multicanal (Fₘᵤₗₜᵢ) vers un ou plusieurs terminaux (TERM), le flux audio multicanal (Fₘᵤₗₜᵢ) agrégeant les flux audio monocanal (Fₘₒₙₒ1 - FₘₒₙₒN),
- une utilisation, par un terminal (TERM), de la table de description (TAB) reçue et du flux audio multicanal (Fₘᵤₗₜᵢ) pour appliquer un filtrage de spatialisation sonore des flux audio monocanal (Fₘₒₙₒ1 - FₘₒₙₒN) en fonction des localisations respectives de chaque flux audio monocanal (Fₘₒₙₒ1 - FₘₒₙₒN), d'une part, et d'une position du spectateur dans ledit espace accueillant l'événement sportif, d'autre part, en vue d'une restitution sonore spatialisée d'une partie au moins des flux audio monocanal (Fₘₒₙₒ1 - FₘₒₙₒN) sur le terminal (TERM), **caractérisé en ce que** le procédé comprend en outre:
- pour chaque phase de jeu, une détermination, par le serveur (SERV) d'un type de phase de jeu, parmi une pluralité de types de phases de jeu,
- une sélection par le serveur (SERV), dans une bibliothèque (BIB) de flux audio informatifs (F_{info}1 - F_{info}N), d'au moins un flux audio informatif (F_{info}1 - F_{info}N) en fonction du type de la phase de jeu déterminé, et
- une transmission par le serveur (SERV) du flux audio informatif (F_{info}1 - F_{info}N) au terminal (TERM) en vue de sa restitution sonore, et dans lequel la détermination du type de phase de jeu est menée par apprentissage sur des images acquises par capture vidéo de phases de jeu par au moins une caméra, l'apprentissage étant effectué au moyen d'une technique de réseaux de neurones profonds.

2. Procédé selon la revendication 1, dans lequel l'analyse de la scène sonore (SS) comprend en outre :
- pour chaque flux audio monocanal (Fₘₒₙₒ1 - FₘₒₙₒN), une classification dans une classe parmi une pluralité de classes, en fonction d'un type de la source sonore (S1 - SN) associée au flux audio monocanal (Fₘₒₙₒ1 - FₘₒₙₒN),
la table de description (TAB) comportant en outre une donnée de classe de flux audio monocanal (Fₘₒₙₒ1 - FₘₒₙₒN) en association de chaque identifiant (ID) de flux audio monocanal (Fₘₒₙₒ1 - FₘₒₙₒN),
et le procédé comprenant, auprès du terminal (TERM) :
- une lecture de la table de description (TAB), pour identifier la classe de chaque flux audio monocanal (Fₘₒₙₒ1 - FₘₒₙₒN),
- l'application de gains respectifs aux flux audio monocanal (Fₘₒₙₒ1 - FₘₒₙₒN) pour la restitution sonore spatialisée, les gains étant choisis par un spectateur du terminal (TERM) en fonction de la classe de chaque flux audio monocanal (Fₘₒₙₒ1 - FₘₒₙₒN).

3. Procédé selon l'une des revendications 1 et 2, comprenant une détermination d'une orientation du spectateur par rapport à un référentiel choisi,
le procédé comprenant en outre une application de gains respectifs aux flux audio monocanal spatialisés (Fₛₚₐₜᵢₐ1 - FₛₚₐₜᵢₐN), les gains respectifs appliqués aux flux audio monocanal spatialisés (Fₛₚₐₜᵢₐ1 - FₛₚₐₜᵢₐN) évoluant en fonction de la position et/ou de l'orientation du spectateur par rapport au référentiel choisi.

4. Procédé selon l'une des revendications précédentes, comprenant une division de l'espace accueillant l'événement sportif en une pluralité de sous-espaces, au moins un capteur audio (M1 - MN) étant prévu dans chaque sous-espace,
le procédé comportant la construction de la scène sonore (SS) par un mixage des flux audio bruts (F_{B}1 - F_{B}N) captés par les capteurs audio (M1 - MN),
le procédé comprenant, pour l'analyse de la scène sonore (SS), une détermination des positions de sources sonores (S1 - SN) relativement à chacun desdits sous-espaces.

5. Procédé selon l'une des revendications 1 à 4, dans lequel l'isolation de sources sonores (S1 - SN) est effectuée par séparation de sources.

6. Procédé selon l'une des revendications 1 à 4, dans lequel l'isolation de sources sonore (S1 - SN) est effectuée par masquage temps-fréquence.

7. Procédé selon la revendication 2 ou selon l'une des revendications 3 à 6 lorsqu'elles dépendent de la revendication 2, dans lequel la classification des flux audio monocanal (Fₘₒₙₒ1 - FₘₒₙₒN) est menée par apprentissage, les flux audio monocanal (Fₘₒₙₒ1 - FₘₒₙₒN) étant classifiés par une technique de réseaux de neurones profonds.

8. Système de diffusion (SYST) d'un flux audio multicanal (Fₘᵤₗₜᵢ) à des terminaux (TERM) de spectateurs assistant à un évènement sportif comprenant :
- un module d'acquisition (MAC), comprenant une pluralité de capteurs audio (M1 - MN) répartis sur un espace accueillant l'événement sportif, d'une pluralité de flux audio bruts (F_{B}1 - F_{B}N) constituant une scène sonore (SS) comportant une ou plusieurs sources sonores (S1 - SN),
- un serveur (SERV) comprenant un module informatisé d'analyse (MIA) de la scène sonore (SS) configuré pour :
∘ isoler chaque source sonore (S1 -SN) de la scène sonore (SS) et attribuer un flux audio monocanal (Fₘₒₙₒ1 - FₘₒₙₒN) propre à chaque source sonore (S1 -SN),
∘ pour chaque flux audio monocanal (Fₘₒₙₒ1 - FₘₒₙₒN), localiser la source sonore (S1 - SN) associée au flux monocanal (Fₘₒₙₒ1 - FₘₒₙₒN) dans l'espace accueillant l'événement sportif,
∘ générer une table de description (TAB) des flux audio monocanal (Fₘₒₙₒ1 - FₘₒₙₒN), la table de description (TAB) comportant un identifiant (ID) de chaque flux audio monocanal (Fₘₒₙₒ1 - FₘₒₙₒN) et, en association avec chaque identifiant (ID) de flux audio monocanal (Fₘₒₙₒ1 - FₘₒₙₒN), au moins une donnée de localisation,
∘ transmettre, via un module de transmission (MT), la table de description (TAB) avec un flux audio multicanal (Fₘᵤₗₜᵢ) vers un ou plusieurs terminaux (TERM), le flux audio multicanal (Fₘᵤₗₜᵢ) agrégeant les flux audio monocanal(Fₘₒₙₒ1 - FₘₒₙₒN),
- un terminal (TERM) configuré pour :
∘ utiliser la table de description (TAB) reçue et le flux audio multicanal (Fₘᵤₗₜᵢ) pour appliquer un filtrage de spatialisation sonore des flux audio monocanal (Fₘₒₙₒ1 - FₘₒₙₒN) en fonction des localisations respectives de chaque flux audio monocanal (Fₘₒₙₒ1 - FₘₒₙₒN), d'une part, et d'une position du spectateur dans ledit espace accueillant l'événement sportif, d'autre part, en vue d'une restitution sonore spatialisée d'une partie au moins des flux audio monocanal (Fₘₒₙₒ1 - FₘₒₙₒN) sur le terminal,
**caractérisé en ce que**
le serveur (SERV) est en outre configuré pour :
- déterminer, pour chaque phase de jeu, un type de phase de jeu, parmi une pluralité de types de phases de jeu,
- sélectionner, dans une bibliothèque (BIB) de flux audio informatifs (F_{info}1 - F_{info}N), au moins un flux audio informatif (F_{info}1 - F_{info}N) en fonction du type de la phase de jeu déterminé, et
- transmettre le flux audio informatif (F_{info}1 - F_{info}N) au terminal (TERM) en vue de sa restitution sonore, et
dans lequel la détermination du type de phase de jeu est menée par apprentissage sur des images acquises par capture vidéo de phases de jeu par au moins une caméra, l'apprentissage étant effectué au moyen d'une technique de réseaux de neurones profonds.

9. Système selon la revendication 8, dans lequel un capteur d'orientation est apte à déterminer l'orientation du spectateur dans l'espace, le capteur d'orientation étant choisi parmi une centrale inertielle et/ou un accéléromètre.

## Patentansprüche

1. Verfahren zum Rundsenden eines Mehrkanal-Audiostream (Fₘᵤₗₜᵢ) zu Endgeräten (TERM) von Zuschauern, die eine Sportveranstaltung besuchen,
wobei das Verfahren Folgendes umfasst:
- Erfassen, mittels einer Vielzahl von Audiosensoren (M1 - MN), die über einen Raum verteilt sind, in dem die Sportveranstaltung stattfindet, einer Vielzahl von rohen Audiostreams (F_{B}1 - F_{B}N), die einen Klangraum (SS) mit einer oder mehreren Klangquellen (S1 - SN) bilden,
- Analysieren des Klangraums (SS) durch einen Server (SERV), das Folgendes umfasst:
∘ Isolieren jeder Klangquelle (S1 - SN) des Klangraums (SS) und Zuweisen eines jeder Klangquelle (S1 - SN) eigenen Einkanal-Audiostream (Fₘₒₙₒ1 - FₘₒₙₒN),
∘ räumliches Lokalisieren, für jeden Einkanal-Audiostream (Fₘₒₙₒ1 - FₘₒₙₒN), in Abhängigkeit von einer Position in dem Raum, in dem die Sportveranstaltung stattfindet, der mit dem Einkanal-Audiostream (Fₘₒₙₒ1 - FₘₒₙₒN) assoziierten Klangquelle (S1 - SN),
∘ Erzeugen einer Beschreibungstabelle (TAB) der Einkanal-Audiostreams (Fₘₒₙₒ1 - FₘₒₙₒN), wobei die Beschreibungstabelle (TAB) eine Kennung (ID) jedes Einkanal-Audiostream (Fₘₒₙₒ1 - FₘₒₙₒN) und, in Assoziation mit jeder Kennung (ID) des Einkanal-Audiostreams (Fₘₒₙₒ1 - FₘₒₙₒN), mindestens eine Ortsangabe umfasst,
- Senden, durch den Server (SERV), der Beschreibungstabelle (TAB) mit einem Mehrkanal-Audiostream (Fₘᵤₗₜᵢ) zu einem oder mehreren Endgeräten (TERM), wobei der Mehrkanal-Audiostream (Fₘᵤₗₜᵢ) die Einkanal-Audiostreams (Fₘₒₙₒ1 - FₘₒₙₒN) aggregiert,
- Verwenden, durch ein Endgerät (TERM), der empfangenen Beschreibungstabelle (TAB) und des Mehrkanal-Audiostream (Fₘᵤₗₜᵢ) zum Anwenden einer Raumklangeffektfilterung der Einkanal-Audiostreams (Fₘₒₙₒ1 - FₘₒₙₒN) in Abhängigkeit von den jeweiligen Orten jedes Einkanal-Audiostream (Fₘₒₙₒ1 - FₘₒₙₒN) einerseits und einer Position des Zuschauers in dem Raum, in dem die Sportveranstaltung stattfindet, andererseits, im Hinblick auf eine räumliche Klangwiedergabe mindestens eines Teils der Einkanal-Audiostreams (Fₘₒₙₒ1 - FₘₒₙₒN) auf dem Endgerät (TERM), **dadurch gekennzeichnet, dass** das Verfahren ferner Folgendes umfasst:
- Bestimmen, durch den Server (SERV), für jede Spielphase, eines Spielphasentyps aus einer Vielzahl von Spielphasentypen,
- Auswählen, durch den Server (SERV), in einer Bibliothek (BIB) von informativen Audiostreams (F_{info}1 - F_{info}N), mindestens eines informativen Audiostreams (F_{info}1 - F_{info}N) in Abhängigkeit von dem bestimmten Spielphasentyp, und
- Senden, durch den Server (SERV), des informativen Audiostreams (F_{info}1 - F_{info}N) zu dem Endgerät (TERM) im Hinblick auf seine akustische Wiedergabe, und wobei das Bestimmen des Spielphasentyps durch Lernen an durch Videoaufnahme von Spielphasen durch mindestens eine Kamera erfassten Bildern erfolgt, wobei das Lernen mittels einer tiefen neuronalen Netzwerktechnik erfolgt.

2. Verfahren nach Anspruch 1, wobei das Analysieren des Klangraums (SS) ferner Folgendes umfasst:
- Klassifizieren, für jeden Einkanal-Audiostream (Fₘₒₙₒ1 - FₘₒₙₒN), einer von mehreren Klassen in Abhängigkeit von einem Typ der mit dem Einkanal-Audiostream (Fₘₒₙₒ1 - FₘₒₙₒN) assoziierten Klangquelle (S1 - SN),
wobei die Beschreibungstabelle (TAB) ferner eine Einkanal-Audiostream-Klassenangabe (Fₘₒₙₒ1 - FₘₒₙₒN) in Assoziation mit jeder Einkanal-Audiostream-Kennung (ID) (Fₘₒₙₒ1 - FₘₒₙₒN) aufweist,
und wobei das Verfahren am Endgerät (TERM) Folgendes umfasst:
- Lesen der Beschreibungstabelle (TAB) zum Identifizieren der Klasse jedes Einkanal-Audiostream (Fₘₒₙₒ1 - FₘₒₙₒN),
- Anwenden jeweiliger Verstärkungen auf die Einkanal-Audiostreams (Fₘₒₙₒ1 - FₘₒₙₒN) für die räumliche Klangwiedergabe, wobei die Verstärkungen von einem Betrachter des Endgeräts (TERM) in Abhängigkeit von der Klasse jedes Einkanal-Audiostreams (Fₘₒₙₒ1 - FₘₒₙₒN) ausgewählt werden.

3. Verfahren nach einem der Ansprüche 1 und 2, das eine Bestimmung einer Orientierung des Zuschauers in Bezug auf einen ausgewählten Bezugsrahmen umfasst,
wobei das Verfahren ferner das Anwenden jeweiliger Verstärkungen auf die räumlichen Einkanal-Audiostreams (Fₛₚₐₜᵢₐ1 - FₛₚₐₜᵢₐN) umfasst, wobei sich die jeweiligen auf die räumlichen Einkanal-Audiostreams (Fₛₚₐₜᵢₐ1 - FₛₚₐₜᵢₐN) angewendeten Verstärkungen in Abhängigkeit von der Position und/oder der Orientierung des Zuschauers in Bezug auf den ausgewählten Bezugsrahmen ändern.

4. Verfahren nach einem der vorhergehenden Ansprüche, das eine Unterteilung des Raums, in dem die Sportveranstaltung stattfindet, in eine Vielzahl von Subräumen umfasst, wobei in jedem Subraum mindestens ein Audiosensor (M1 - MN) vorgesehen ist,
wobei das Verfahren das Konstruieren des Klangraums (SS) durch Mischen der von den Audiosensoren (M1 - MN) erfassten rohen Audiostreams (F_{B}1 - F_{B}N) umfasst,
wobei das Verfahren zum Analysieren des Klangraums (SS) das Bestimmen der Positionen von Klangquellen (S1 - SN) relativ zu jedem der Subräume umfasst.

5. Verfahren nach einem der Ansprüche 1 bis 4, wobei das Isolieren von Klangquellen (S1 - SN) durch Quellentrennung erfolgt.

6. Verfahren nach einem der Ansprüche 1 bis 4, wobei das Isolieren von Klangquellen (S1 - SN) durch Zeit-Frequenz-Maskierung erfolgt.

7. Verfahren nach Anspruch 2 oder nach einem der Ansprüche 3 bis 6 in Abhängigkeit von Anspruch 2, wobei die Klassifizierung von Einkanal-Audiostreams (Fₘₒₙₒ1 - FₘₒₙₒN) durch Lernen erfolgt, wobei die Einkanal-Audiostreams (Fₘₒₙₒ1 - FₘₒₙₒN) durch eine tiefe neuronale Netzwerktechnik klassifiziert werden.

8. System zum Rundsenden (SYST) eines Mehrkanal-Audiostreams (Fₘᵤₗₜᵢ) zu Endgeräten (TERM) von Zuschauern, die eine Sportveranstaltung besuchen, das Folgendes umfasst:
- ein Erfassungsmodul (MAC), umfassend eine Vielzahl von Audiosensoren (M1 - MN), die über einen Raum verteilt sind, in dem die Sportveranstaltung stattfindet, zum Erfassen einer Vielzahl von rohen Audiostreams (F_{B}1 - F_{B}N), die einen Klangraum (SS) mit einer oder mehreren Klangquellen (S1 - SN) bilden,
- einen Server (SERV), der ein computergestütztes Modul (MIA) zum Analysieren des Klangraums (SS) umfasst, konfiguriert zum:
∘ Isolieren jeder Klangquelle (S1 - SN) des Klangraums (SS) und Zuweisen eines eigenen Einkanal-Audiostreams (Fₘₒₙₒ1 - FₘₒₙₒN) zu jeder Klangquelle (S1 - SN),
∘ Lokalisieren, für jeden Einkanal-Audiostream (Fₘₒₙₒ1 - FₘₒₙₒN), der Klangquelle (S1 - SN), die mit dem Einkanalstream (Fₘₒₙₒ1 - FₘₒₙₒN) in dem Raum assoziiert ist, in dem die Sportveranstaltung stattfindet,
∘ Erzeugen einer Beschreibungstabelle (TAB) von Einkanal-Audiostreams (Fₘₒₙₒ1 - FₘₒₙₒN), wobei die Beschreibungstabelle (TAB) eine Kennung (ID) jedes Einkanal-Audiostream (Fₘₒₙₒ1 - FₘₒₙₒN) und, in Assoziation mit jeder Kennung (ID) des Einkanal-Audiostream (Fₘₒₙₒ1 - FₘₒₙₒN), mindestens eine Ortsangabe aufweist,
∘ Senden, über ein Sendemodul (MT), der Beschreibungstabelle (TAB) zusammen mit einem Mehrkanal-Audiostream (Fₘᵤₗₜᵢ) zu einem oder mehreren Endgeräten (TERM), wobei der Mehrkanal-Audiostream (Fₘᵤₗₜᵢ) die Einkanal-Audiostreams (Fₘₒₙₒ1 - FₘₒₙₒN) aggregiert,
- ein Endgerät (TERM), konfiguriert zum:
∘ Verwenden der empfangenen Beschreibungstabelle (TAB) und des Mehrkanal-Audiostream (Fₘᵤₗₜᵢ) zum Anwenden einer Raumklangeffektfilterung der Einkanal-Audiostreams (Fₘₒₙₒ1 - FₘₒₙₒN) in Abhängigkeit von den jeweiligen Orten jedes Einkanal-Audiostream (Fₘₒₙₒ1 - FₘₒₙₒN) einerseits und einer Position des Zuschauers in dem Raum, in dem die Sportveranstaltung stattfindet, andererseits, im Hinblick auf eine räumliche Klangwiedergabe mindestens eines Teils der Einkanal-Audiostreams (Fₘₒₙₒ1 - FₘₒₙₒN) auf dem Endgerät (TERM),
**dadurch gekennzeichnet, dass**
der Server (SERV) ferner konfiguriert ist zum:
- Bestimmen, für jede Spielphase, eines Spielphasentyps aus einer Vielzahl von Spielphasentypen,
- Auswählen, in einer Bibliothek (BIB) von informativen Audiostreams (F_{info}1 - F_{info}N), mindestens eines informativen Audiostreams (F_{info}1 - F_{info}N) in Abhängigkeit vom Typ der ermittelten Spielphase, und
- Senden des informativen Audiostreams (F_{info}1 - F_{info}N) zu dem Endgerät (TERM) im Hinblick auf seine akustische Wiedergabe, und
wobei das Bestimmen des Spielphasentyps durch Lernen an durch Videoaufnahme von Spielphasen durch mindestens eine Kamera erfassten Bildern erfolgt, wobei das Lernen mittels einer tiefen neuronalen Netzwerktechnik erfolgt.

9. System nach Anspruch 8, wobei ein Orientierungssensor die Orientierung des Zuschauers im Raum bestimmen kann, wobei der Orientierungssensor aus einer Trägheitssteuerung und/oder einem Beschleunigungsmesser ausgewählt wird.

## Claims

1. A method for broadcasting a multichannel audio stream (Fₘᵤₗₜᵢ) to terminals (TERM) of spectators attending a sports event,
the method comprising:
- acquisition of a plurality of raw audio streams (F_{B}1 - F_{B}N) constituting a soundscape (SS) having one or more sound sources (S1 - SN) by means of a plurality of audio sensors (M1 - MN) distributed over a space hosting the sports event,
- analysis, by a server (SERV), of the soundscape (SS) comprising:
∘ isolation of each sound source (S1 - SN) of the soundscape (SS) and assignment of a single-channel audio stream (Fₘₒₙₒ1 - FₘₒₙₒN) specific to each sound source (S1 - SN),
∘ for each single-channel audio stream (Fₘₒₙₒ1 - FₘₒₙₒN), a spatial localisation as a function of a position of the sound source (S1 - SN) associated with the single-channel audio stream (Fₘₒₙₒ1 - FₘₒₙₒN), in the space hosting the sporting event,
∘ generation of a description table (TAB) of the single-channel audio streams (Fₘₒₙₒ1 - FₘₒₙₒN), the description table (TAB) comprising an identifier (ID) of each single-channel audio stream (Fₘₒₙₒ1 - FₘₒₙₒN) and, in association with each single-channel audio stream (Fₘₒₙₒ1 - FₘₒₙₒN) identifier (ID), at least one localisation data;
- transmission of the description table (TAB) with a multichannel audio stream (Fₘᵤₗₜᵢ) to one or more terminals (TERM) by the server (SERV), the multichannel audio stream (Fₘᵤₗₜᵢ) aggregating the single-channel audio streams (Fₘₒₙₒ1 - FₘₒₙₒN);
- use of the received description table (TAB) and of the multichannel audio stream (Fₘᵤₗₜᵢ) by a terminal (TERM) for applying a sound spatialisation filtering of the single-channel audio streams (Fₘₒₙₒ1 - FₘₒₙₒN) according to the respective locations of each single-channel audio stream (Fₘₒₙₒ1 - FₘₒₙₒN) on the one hand and on the position of the spectator in said space hosting the sporting event on the other hand, in order to playback spatialised sound of at least one part of the single-channel audio streams (Fₘₒₙₒ1 - FₘₒₙₒN) on the terminal (TERM).
**characterised in that** the method further comprises:
- for each game phase, a determination, by the server (SERV) of a type of game phase, among a plurality of types of game phases,
- a selection by the server (SERV), in a library (BIB) of informative audio streams (F_{info}1 - F_{info}N), of at least one informative audio stream (F_{info}1 - F_{info}N) according to the type of game phase determined, and
- transmission by the server (SERV) of the informative audio stream (F_{info}1 - F_{info}N) to the terminal (TERM) with a view to its sound reproduction, and wherein the determination of the type of game phase is carried out by learning on images acquired by video capture of game phases by at least one camera, the learning being carried out by means of a technique of deep neural networks.

2. The method according to claim 1, wherein the analysis of the soundscape (SS) further comprises:
- for each single-channel audio stream (Fₘₒₙₒ1 - FₘₒₙₒN), a classification into one class among a plurality of classes, as a function of a type of the sound source (S 1 - SN) associated with the single-channel audio stream (Fₘₒₙₒ1 - FₘₒₙₒN),
the description table (TAB) further having single-channel audio stream (Fₘₒₙₒ1 - FₘₒₙₒN) class data associated with each single-channel audio (Fₘₒₙₒ1 - FₘₒₙₒN) stream identifier (ID),
and the method comprising, in the terminal (TERM):
- reading from the description table (TAB) for identifying the class of each single-channel audio stream (Fₘₒₙₒ1 - FₘₒₙₒN),
- application of respective gains to the single-channel audio streams (Fₘₒₙₒ1 - FₘₒₙₒN) for the spatialised sound playback, the gains being chosen by a spectator of the terminal (TERM) according to the class of each single-channel audio stream (Fₘₒₙₒ1 - FₘₒₙₒN).

3. The method according to one of claims 1 and 2, comprising a determination of an orientation of the spectator relative to a chosen reference frame,
the method further comprising an application of respective gains to the spatialised single-channel audio streams (Fₛₚₐₜᵢₐ1 - FₛₚₐₜᵢₐN), the respective gains applied to the spatialised single-channel audio streams (Fₛₚₐₜᵢₐ1 - FₛₚₐₜᵢₐN) changing as a function of the position and/or orientation of the spectator relative to the chosen reference frame.

4. The method according to any one of the preceding claims, comprising a division of the space hosting the sporting event into a plurality of sub spaces, at least one audio sensor (M1 - MN) being provided in each subspace,
the method comprising the construction of the soundscape (SS) by a mixing of the raw audio streams (F_{B}1 - F_{B}N) captured by the audio sensors (M1 - MN),
the method comprising, for the analysis of the soundscape (SS), a determination of the positions of the sound sources (S1 - SN) relative to each of said subspaces.

5. The method according to one of claims 1 to 4, wherein the isolation of sound sources (S1 - SN) is done by separation of sources.

6. The method according to one of claims 1 to 4, wherein the isolation of sound sources (S1 - SN) is done by temporal-frequency masking.

7. The method according to claim 2 or according to one of claims 3 to 6 when depending on claim 2, wherein the classification of the single-channel audio streams (Fₘₒₙₒ1 - FₘₒₙₒN) is done by learning, the single-channel audio streams (Fₘₒₙₒ1 - FₘₒₙₒN) being classified by a deep neural network technique.

8. A system for broadcasting (SYST) a multichannel audio stream (Fₘᵤₗₜᵢ) to terminals (TERM) of spectators attending a sports event comprising:
- an acquisition module (MAC), comprising a plurality of audio sensors (M1 - MN) distributed over a space hosting the sports event, for the acquisition of a plurality of raw audio streams (F_{B}1 - F_{B}N) constituting a soundscape (SS) comprising one or more sound sources (S1 - SN),
- a server (SERV) comprising a computerised module (MIA) for analysis of the soundscape (SS) configured for:
∘ isolating each sound source (S1 - SN) of the soundscape (SS) and assigning a single-channel audio stream (Fₘₒₙₒ1 - FₘₒₙₒN) specific to each sound source (S1 - SN);
∘ for each single-channel audio stream (Fₘₒₙₒ1 - FₘₒₙₒN), localising the sound source (S1 - SN) associated with the single-channel audio stream (Fₘₒₙₒ1 - FₘₒₙₒN), in the space hosting the sporting event;
∘ generating a description table (TAB) of the single-channel audio streams (Fₘₒₙₒ1 - FₘₒₙₒN), the description table (TAB) having an identifier (ID) of each single-channel audio stream (Fₘₒₙₒ1 - FₘₒₙₒN) and, in association with each single-channel audio stream (Fₘₒₙₒ1 - FₘₒₙₒN) identifier (ID), at least one localisation data;
∘ transmitting, via a transmission module (MT) the description table (TAB) with a multichannel audio stream (Fₘᵤₗₜᵢ) to one or more terminals (TERM), the multichannel audio stream (Fₘᵤₗₜᵢ) aggregating the single-channel audio streams (Fₘₒₙₒ1 - FₘₒₙₒN) ;
- a terminal (TERM) configured for:
∘ using the received description table (TAB) and of the multichannel audio stream (Fₘᵤₗₜᵢ) for applying a sound spatialisation filtering of the single-channel audio streams (Fₘₒₙₒ1 - FₘₒₙₒN) according to the respective locations of each single-channel audio stream (Fₘₒₙₒ1 - FₘₒₙₒN) on the one hand and the position of the spectator in said space hosting the sporting event on the other hand, in order to playback spatialised sound of at least one part of the single-channel audio streams (Fₘₒₙₒ1 - FₘₒₙₒN) on the terminal,
**characterised in that**
the server (SERV) is further configured to:
- determine, for each game phase, a type of game phase, among a plurality of types of game phases,
- select, from a library (BIB) of informative audio streams (F_{info}1 - F_{info}N), at least one informative audio stream (F_{info}1 - F_{info}N) according to the type of game phase determined, and
- transmit the informative audio stream (F_{info}1 - F_{info}N) to the terminal (TERM) with a view to its sound reproduction, and
wherein the determination of the type of game phase is performed by learning on images acquired by video capture of game phases by at least one camera, the learning being performed by means of a technique of deep neural networks.

9. The system according to claim 8, wherein an orientation sensor is able to determine the orientation of the spectator in space, the orientation sensor being chosen among an inertial navigation unit and/or an accelerometer.
